# EUROPEAN PATENT SPECIFICATION

(11) **EP 2 516 515 B1**
(45) Date of publication and mention of the grant of the patent: **18.06.2014**
(21) Application number: 10801285.7
(22) Date of filing: 21.12.2010
(51) Int. Cl.: C08J 3/03, C08J 3/05, C08J 3/09, C08J 3/26, C08L 83/08, C08G 77/06, C08G 77/12, C08G 77/20, C08G 77/26, C08G 77/50, C08L 83/14

(54) **METHOD OF PRODUCING A SILICONE OIL COMPOSITION**
VERFAHREN ZUR HERSTELLUNG EINER SILIKONÖLZUSAMMENSETZUNG
PROCEDE DE PRODUCTION DE COMPOSITION D'HUILE DE SILICONE

(30) Priority: 22.12.2009 JP 2009290480
(43) Date of publication of application: 31.10.2012
(73) Proprietor: Dow Corning Toray Co., Ltd., Tokyo, 100-0004 (JP)
(72) Inventor: MORITA, Yoshitsugu, Ichihara-shi Chiba 299-0108 (JP); TAKIMOTO, Tadashi, Ichihara-shi Chiba 299-0108 (JP); KOBAYASHI, Kazuo, Ichihara-shi Chiba 299-0108 (JP); TACHIBANA, Ryuji, Ichihara-shi Chiba 299-0108 (JP)
(74) Representative: Thomson, Craig Richard
(86) International application number: PCT/JP2010/073669
(87) International publication number: WO 2011/078396

(56) References cited:
- JP-A- 2000 281 523
- JP-A- 2000 281 903
- JP-A- 2003 176 415
- US-A1- 2002 175 123
- US-B1- 6 398 865

## Description

### Technical Field

The present invention relates to a method of preparing a silicone oil composition that contains cross-linked silicone particles dispersed in an amino-modified silicone oil.

### Background Art

Patent References I and 2 disclose a method of preparing a silicone oil emulsion that contains cross-linked silicone particles in silicone oil drops dispersed in water, wherein after dispersing a silicone-oil-containing cross-linkable silicone composition in water, the aforementioned composition is cross-linked. Following this, the desired silicone oil composition that contains cross-linked silicone particles is obtained by removing the water.

However, since the above method is limited only to the use of a silicone oil that does not affect cross-linking of the cross-linkable silicone composition, amino-modified silicone oils could not be used.

Patent Reference No. 3 discloses a dilantant liquid, which is composed of amino-modified silicone oil and cross-linked silicone particles and is prepared by merely mixing amino-modified silicone oil with cross-linked silicone particles.

However, it was difficult to produce a silicone composition that contained cross-linked silicone particles uniformly dispersed in amino-modified silicone oil by the above method with sufficient efficiency.

[Patent Reference No. 1] Japanese Unexamined Patent Application Publication (hereinafter referred to as "Kokai") 2000-281523
[Patent Reference No. 2] Kokai 2000-281903
[Patent Reference No. 3] Kokai 2003-176415

### Summary of Invention

### Technical Problems to be Solved

It is an object of the present invention to provide an efficient method of preparing a silicone oil composition that contains cross-linked silicone particles uniformly dispersed in an amino-modified silicone oil.

### Solution to Problems

The above object is achieved by a inventive method of producing a silicone oil composition, which is characterized by removing water after mixing an aqueous suspension of cross-linked silicone particles having an average particle diameter in the range of 0.1 to 500 µm with an aqueous emulsion of an amino-modified silicone oil having an average emulsion particle diameter in the range of 0.05 to 100 µm**.**

A preferable method of the invention is further characterized by removing the water while stirring water-based mixture under reduced pressure with a stirring apparatus that has at least a stirring means that rotates at low speed along the inner wall of a container and a stirring means that rotates at high speed in the interior of the container, after mixing the aqueous suspension of cross-linked silicone particles with the aqueous emulsion of the amino-modified silicone oil.

### Advantageous Effects of Invention

The production method of the invention makes it possible to produce with high efficiency a silicone oil composition having excellent handling property and containing cross-linked silicone oil particles uniformly dispersed in an amino-modified silicone oil.

### Brief Description of the Drawings

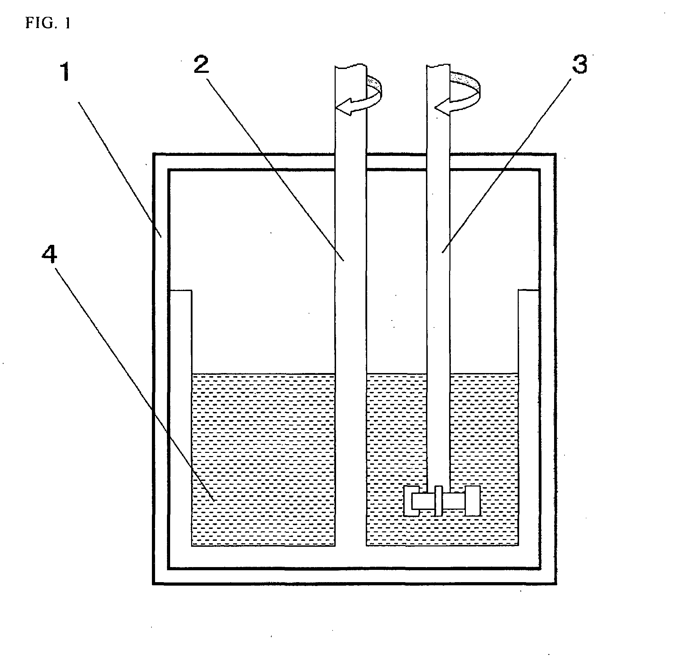

Fig. 1 is a cross-sectional drawing that shows an example of a stirring apparatus used by the production method of the present invention.

### Best Mode for Carrying Out the Invention

The aqueous suspension of cross-linked silicone particles used in the present invention comprises cross-linked silicone particles dispersed in water. Preferably, the suspension is obtained by cross-linking an aqueous emulsion of a cross-linkable silicone composition. Such a composition may be one cross-linkable, e.g., by a hydrosilylation reaction, a condensation reaction, a reaction conducted with the use of an organic peroxide, or with the use of high-energy rays. Compositions cross-linkable with hydrosilylation reaction or condensation reaction are preferable. Silicone particles may be produced in different forms, such as rubber-like, gel-like form or in the form of other elastomers. The cross-linked particles may have different shapes such as a spherical shape, a flat shape, or a spindle shape, of which the spherical shape is preferable. The cross-linked silicone particles may have an average diameter in the range of 0.1 to 500 µm, preferably in the range of 0.1 to 200 µm, further preferably, in the range of 0.1 to 100 µm, and most preferably, in the range of 0.1 to 50 µm.

Hydrosilylation reaction-crosslinkable silicone compositions can be exemplified by a composition comprising at least (A) an organopolysiloxane that has at least two alkenyl groups in each molecule, (B) an organopolysiloxane that has at least two silicon-bonded hydrogen atoms in each molecule, and (C) a hydrosilylation reaction catalyst.

The alkenyl group in component (A) can be exemplified by vinyl, allyl, butenyl, pentenyl, and hexenyl with vinyl being particularly preferred. The non-alkenyl silicon-bonded organic groups in component (A) can be exemplified by monovalent hydrocarbyl groups, e.g., alkyl groups such as methyl, ethyl, propyl, butyl, and so forth; cycloalkyl groups such as cyclopentyl, cyclohexyl, and so forth; aryl groups such as phenyl, tolyl, xylyl, and so forth; aralkyl groups such as benzyl, phenethyl, 3-phenylpropyl, and so forth; and halogenated hydrocarbyl groups such as 3-chloropropyl, 3,3,3-trifluoropropyl, and so forth. The molecular structure of component (A) can be exemplified by straight chain, cyclic, network, and partially branched straight chain, and straight chain and partially branched straight chain are preferred when the formation of an elastomeric silicone powder is sought. Component (A) has a viscosity at 25°C preferably in the range from 20 to 100,000 mPa · s and particularly preferably in the range from 20 to 10,000 mPa · s.

The non-hydrogen silicon-bonded organic groups in component (B) can also be exemplified by monovalent hydrocarbyl groups excluding the same alkenyl group as cited above. The molecular structure of component (B) can be exemplified by straight chain, cyclic, network, and partially branched straight chain. Component (B) has a viscosity at 25°C preferably in the range from 1 to 10,000 mPa · s. Component (B) is incorporated in an amount sufficient to bring about the crosslinking of the composition under consideration, but its amount of incorporation is not otherwise particularly limited. In specific terms, component (B) is preferably incorporated in the range from 0.3 to 200 weight parts per 100 weight parts component (A).

Component (C) is a hydrosilylation reaction catalyst and is used to promote the crosslinking reaction in the composition under consideration. Component (C) is particularly preferably a platinum catalyst. This platinum catalyst can be exemplified by chloroplatinic acid, alcohol solutions of chloroplatinic acid, olefin complexes of platinum, alkenylsiloxane complexes of platinum, platinum black, and platinum supported on silica. Component (C) is incorporated in a quantity sufficient to promote the crosslinking reaction in the composition under consideration, but its quantity of incorporation is not otherwise particularly limited. In those instances in which a platinum catalyst is used for component (C), component (C) is preferably incorporated in an amount that provides from 1 × 10⁻⁷ to I × 10⁻³ weight part platinum metal in component (C) for each 100 weight parts of the total of components (A) and (B).

When crosslinking of this composition is to be undertaken with the composition dispersed in water, component (C) may be incorporated in the composition in advance and the composition may then be crosslinked, or the crosslinkable silicone composition, excluding component (C), may be dispersed in water and component (C) may thereafter be added to the water and the composition may then be crosslinked. In the latter case, the use is preferred of a water-based dispersion in which component (C) has been dispersed to an average particle size of not more than 1 µm.

The condensation reaction-crosslinkable silicone compositions can be exemplified by a composition comprising at least (D) an organopolysiloxane that has at least two silicon-bonded hydroxyl groups or hydrolyzable groups in each molecule wherein the hydrolyzable group can be exemplified by the alkoxy group, oxime group, acetoxy group, aminoxy group, and so forth, (E) a silane-type crosslinking agent that has at least three silicon-bonded hydrolyzable groups, e.g., the alkoxy group, oxime group, acetoxy group, aminoxy group, and so forth, in each molecule, and (F) a condensation reaction catalyst such as an organotin compound, an organotitanium compound, and so forth.

The alkoxy group for component (D) can be exemplified by methoxy, ethoxy, and methoxyethoxy. The oxime group for component (D) can be exemplified by the dimethyl ketoxime group and the methyl ethyl ketoxime group. The other silicon-bonded organic groups in component (D) can be exemplified by monovalent hydrocarbyl groups, e.g., alkyl groups such as methyl, ethyl, propyl, butyl, and so forth; cycloalkyl groups such as cyclopentyl, cyclohexyl, and so forth; alkenyl groups such as vinyl, allyl, butenyl, pentenyl, and hexenyl; aryl groups such as phenyl, tolyl, xylyl, and so forth; aralkyl groups such as benzyl, phenethyl, 3-phenylpropyl, and so forth; and halogenated hydrocarbyl groups such as 3-chloropropyl, 3,3,3-trifluoropropyl, and so forth. The molecular structure of component (D) can be exemplified by straight chain, cyclic, network, and partially branched straight chain, and straight chain and partially branched straight chain are preferred when the formation of an elastomeric silicone powder is sought. Component (D) has a viscosity at 25°C preferably in the range from 20 to 100,000 mPa · s and particularly preferably in the range from 20 to 10,000 mPa · s.

The alkoxy group and oxime group for component (E) can be exemplified by the same groups as already provided above. Component (E) can be exemplified by methyltrimethoxysilane, vinyltrimethoxysilane, methyltrioximesi lane, and vinyltrioximesilane. Component (E) is incorporated in an amount sufficient to bring about the crosslinking of the composition under consideration, but its amount of incorporation is not otherwise particularly limited. In specific terms, component (E) is preferably incorporated in the range from 0.3 to 200 weight parts per 100 weight parts component (D).

Component (F) is a condensation reaction catalyst and is used to promote the crosslinking reaction in the composition under consideration. It can be specifically exemplified by dibutyltin dilaurate, dibutyltin diacetate, tin octenoate, dibutyltin dioctate, tin laurate, tetrabutyl titanate, tetrapropyl titanate, and dibutoxybis(ethyl acetoacetato)titanium. Component (F) is incorporated in an amount sufficient to promote the crosslinking reaction of the composition under consideration, but its amount of incorporation is not otherwise particularly limited. In specific terms, component (F) is preferably incorporated in the range from 0.01 to 5 weight parts per 100 weight parts component (D) and particularly preferably in the range from 0.05 to 2 weight parts per 100 weight parts component (D).

The cross-linkable silicone composition of the invention can be dispersed in water by means of a Homo Mixer, a paddle mixer, a Henschel mixer, a Homo Disperser, a colloid mill, a propeller-type stirrer, a homogenizer, an inline-type continuous emulsifier, an ultrasonic emulsifier, a vacuum kneader, and so forth.

There are no special restrictions with regard to the amount of water needed for dispersion. It may be recommended, however, that water constitute 5 to 99 wt.%, preferably 10 to 80 wt.% of the entire aqueous emulsion. The following compounds can be added for improving stability in dispersing the cross-linkable silicone composition in water: polyoxyalkylenealkyl ether, polyoxyalkylenealkyl phenol, polyoxyalkylenealkyl ester, polyoxyalkylenesorbitane ester, polyethyleneglycol, polypropyleneglycol, ethylene oxide adducts of diethyleneglycol trimethylnonanol, or similar nonionic surface-active agents; hexylbenzene sulfonic acid, octylbenzene sulfonic acid, decylbenzene sulfonic acid, dodecylbenzene sulfonic acid, cetylbenzene sulfonic acid, myristylbenzene sulfonic acid, sodium salts of the above, or similar anionic surface-active agents; octyltrimethyl ammonium hydroxide, dodecyltrimethyl ammonium hydroxide, hexadecyltrimethyl ammonium hydroxide, octyldimethylbenzyl ammonium hydroxide, decyldimethylbenzyl ammonium hydroxide, dioctadecyldimethyl ammonium hydroxide, beef tallow trimethyl ammonium hydroxide, coconut oil trimethyl ammonium hydroxide, or similar cationic surface-active agents. Most preferable are nonionic surface-active agents. The aforementioned agents should be used in an amount of 0.1 to 20 parts by weight, and preferably, 0.5 to 10 parts by weight. Furthermore, some thickeners, such as 2-phenoxyethanol, carboxymethyl cellulose, xanthan gum, or the like can be added for improving stability of the aqueous emulsion.

In the above-described method, the average diameter of the particles of the curable silicone composition dispersed in water should be in the range of 0.1 to 500 µm, preferably in the range of 0.1 to 200 µm, further preferably in the range of 0.1 to 100 µm, and most preferably in the range of 0.1 to 50 µm. The above ranges are recommended because if the particles of the composition dispersed in water have dimensions below the recommended lower limit, it will be difficult to prepare an aqueous emulsion. If, on the other hand, the average diameter exceeds the recommended upper limit, the prepared emulsion will become unstable.

An aqueous suspension of cross-linked silicone particles is obtained by cross-linking the cross-linkable composition dispersed in water as described above. Cross-linking can be carried out by heating the emulsion, retaining the emulsion at room temperature, or irradiating the emulsion with high-energy rays.

On the other hand, an aqueous emulsion of amino-modified silicone oil is obtained by dispersing amino-modified silicone oil in water. Such amino-modified silicone oil can be exemplified by a silicone oil having in its molecule a silicon atom bonded to a 2-aminoethyl group, 3-aminopropyl group, N-cyclohexyl-3-aminopropyl group, N-(2-aminoethyl)-3-aminopropyl group, or a similar amino group. Specific examples are the following:
an amino-modified silicone oil of the following formula: 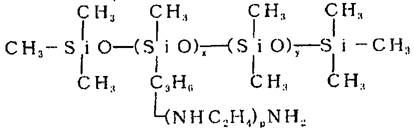 (where, "p" is 0 or 1; "x" is a positive number; and "y" is 0 or a positive number);
an amino-modified silicone oil of the following formula: 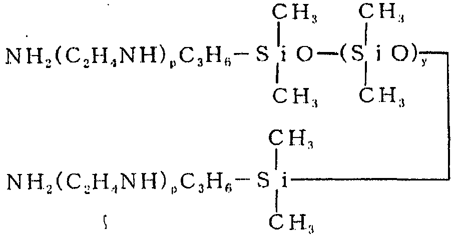 (where, "p" is 0 or 1; "x" is a positive number; and "y" is 0 or a positive number);
an amino-modified silicone oil of the following formula: 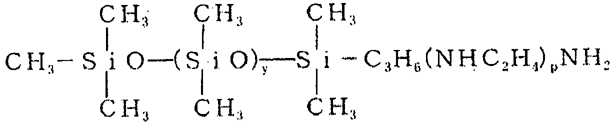 (where, "p" is 0 or 1; "x" is a positive number; and "y" is 0 or a positive number);
an amino-modified silicone oil of the following formula: 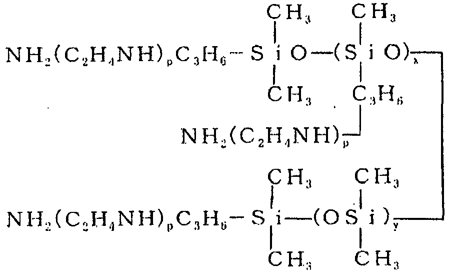
(where, "p" is 0 or 1; "x" is a positive number; and "y" is 0 or a positive number); and the aforementioned amino-modified silicone oils where a part of some of methyl groups is substituted with phenyl groups, 3,3,3-trifluoropropyl groups, hydroxyl groups, methoxy groups, or ethoxy groups. Although there are no special restrictions with regard to viscosity of such amino-modified silicone oils at 25°C, it is recommended that this viscosity be in the range of 1 to 100,000,000 mPa·s, preferably in the range of 5 to 1,000,000 mPa·s, and most preferably, in the range of 5 to 100,000 mPa·s.

The aforementioned amino-modified silicone oils can be dispersed in water by means of a Homo Mixer, a paddle mixer, a Henschel mixer, a Homo Disperser, a colloid mill, a propeller-type stirrer, a homogenizer, an inline-type continuous emulsifier, an ultrasonic emulsifier, a vacuum kneader, and so forth.

There are no special restrictions with regard to the amount of water that may be used in that case but it is recommended that water constitute 5 to 99 wt%, preferably 10 to 80 wt% of the entire aqueous emulsion. In order to improve stability of the amino-modified silicone oil in water, the emulsion may be combined with aforementioned surface-active substances, in particular, with non-ionic surface-active substances. The surface-active substances can be added in an amount of 0.1 to 20 parts by weight, preferably 0.5 to 10 parts by weight, per 100 parts y weight of the amino-modified silicone oil. Furthermore, for improving stability of the aqueous emulsion, the latter can be combined with a thickener, such as 2-phenoxyethanol, carboxymethyl cellulose, xanthan gum, etc.

The average diameter of the emulsified amino-modified silicone oil droplet (= emulsion droplet of amino-modified silicone oil) used in the manufacturing process described above should be in the range of 0.05 to 100 µm, preferably 0.1 to 100 µm, and most preferably, 0.1 to 50 µm. This is because when the emulsion droplets of the amino-modified silicone oil dispersed in water have an average diameter below the recommended lower limit, it is difficult to prepare an aqueous emulsion. On the other hand, if the diameter of the particles exceeds the recommended upper limit, the emulsion becomes unstable.

There are no special restrictions with regard to the mixing ratio of the aqueous suspension of the cross-linked silicone particles to the emulsion of the amino-modified silicone oil used in the manufacturing method of the invention. It may be preferable, however, that the weight ratio of the cross-linked silicone particles to the amino-modified oil be in the range of (1 : 99) to (50 : 50). If the content of the cross-linked silicone particles exceeds the recommended content, the cross-linked silicone particles may easily aggregate, and this may impair its handling property of the obtained silicone composition.

According to the manufacturing method of the invention, upon completion of mixing of the aqueous suspension of the cross-linked silicone particles with the aqueous emulsion of the amino-modified silicone oil, water is removed. Water can be removed by drying in air, drying in hot air flow, drying in vacuum, or drying by heating. Especially, in order to prevent undesirable reaction of the amino-modified silicone oil and to improve water-removing efficiency, it is preferable to remove water from the mixture under reduced pressure by using of a stirring apparatus that has at least a stirring means that rotates at low speed along the inner wall of the container and a stirring means that rotates at high speed in the interior of the container. An example of a stirring apparatus that can be used by the present invention is shown in Figure 1. The production method according to the present invention will be described in detail using Figure 1. ring method of the invention carried out with the use of the apparatus shown in Fig. 1.

A stirring means **2** stirs the the entire mixture(**4**) of the aqueous suspension of the cross-linked silicone particles with the aqueous emulsion of the amino-modified silicone oil as a whole within a container **1**; this stirring is performed by low-speed rotation along the inner wall of the container. This stirring means **2** can be exemplified by an anchor mixer and by a scraper-equipped anchor mixer. This stirring means **2** inhibits local stagnation of the water-based emulsion within the container and thereby makes possible an even and uniform removal of the water from the mixture. This stirring means **2** rotates at low speed, and its rotation rate is preferably in the range from 1 to 500 rpm.

The stirring means **3**, through its high-speed rotation in the interior of the container **1**, forcibly stirs the mixture therein or the oil composition therein provided by the removal of the water from the mixture. The reasons for the preceding are as follows: the efficient removal of the water from the water-based emulsion is highly problematic when only the stirring means **2** is present; when only the stirring means **3** is present, the water-based emulsion **4** is stirred locally in the vicinity of the stirring means **3**, and as a result the efficient removal of the water from the water-based emulsion **4** is highly problematic. This stirring means **3** can be exemplified by impeller-type stirring devices having a paddle or blade - e.g., a fan, propeller, soft cross, square cross, butterfly, turbine, disc turbine, curved disc turbine, blade turbine, tilted paddle, disperser, and so forth - mounted on a stirring shaft, and by homomixers comprising a high-speed rotating turbine blade and a stator. A disperser-mixer is particularly preferred. The stirring means 3 rotates at high speed, and its rotation rate is preferably in the range from 1,000 to 20,000 rpm.

Water is removed in the production method according to the present invention while stirring the mixture under reduced pressure; however, in order to accelerate water removal, the mixture is preferably heated to a temperature below 100°C and particularly preferably is heated to a temperature in the range from 50 to 90°C. While the degree of pressure reduction is also not particularly limited, 100 mmHg and below is preferred and 50 mmHg and below is particularly preferred.

The silicone oil composition obtained by the above-described method comprises cross-linked silicone particles uniformly dispersed in the amino-modified silicone oil. The composition may be prepared in a liquid form, cream-like form, paste-like form, or grease-like form. If necessary, the composition can be combined with arbitrary components such as thickeners, fillers, solvents, pigments, etc.

The silicone oil composition obtained by the method of the present invention is suitable for use as a cosmetic material or a cosmetic raw material. The cosmetic material may comprise soap, body shampoo, facial cream, or similar cleaning cosmetic; cosmetic water, milky cream cleanser, packs, or similar basic cosmetics; face powder, foundation or similar base make-up; lipstick, rouge, eye shadow, eyeliner, mascara, or similar eye make-up; manicure related products or similar makeup materials; shampoo, hair rinse, hair treatments, hair set lotion, blow styling lotion, hair spray, foam styling agent, jet styling agent, hair liquid, hair tonic, hair cream, hair growth accelerator, hair nourishment, hair dye, hair dressing, or similar hair cosmetics; perfume, cologne, or ; tooth paste, similar aromatic cosmetics; substances for the bath; hair removal substances; hair removal cream, shaving lotion, antiperspirant, lotion with sun protection, or other specific cosmetics. The silicone oil composition is most preferable for use in basic cosmetics, makeup cosmetics or other skin-related cosmetics. The cosmetics may be water-based solutions, oil-based solutions, emulsions, creams, foams, semi-solids, solids, or powders. In addition, they may be in spray form.

In the preparation of the cosmetic material based on the aforementioned silicone oil composition, the cosmetics mentioned above may be combined with other cosmetic raw material components such as carnauba wax, candelilla wax, Japan wax, whale wax, jojoba oil wax, montan wax, bee wax, lanolin wax, or similar waxes; liquid paraffin, iso-paraffin, hexyl laurate, isopropyl myristate, cetyl myristate, 2-octyl dodecyl myristate, butyl stearate, decyl oleate, 2-octyldodecyl oleate, myristyl lactate, cetyl lactate, acetylated lanolin, stearyl alcohol, cetostearyl alcohol, oleyl alcohol, avocado oil, almond oil, olive oil, cacao oil, jojoba oil, sesame oil, safflower oil, soybean oil, Camellia oil, squalane, persic oil, castor oil, mink oil, cottonseed oil, coconut oil, egg yolk oil, pork fat, or other fats and oils; polypropylene glycol monooleate, neopentyl glycol-2-ethylhexanoate, and other glycol ether oils; isostearic acid triglyceride, coconut oil fatty acid triglyceride, and other polyhydric alcohol ester oils; polyoxyethylene lauryl ether, polyoxypropylene cetyl ether, and other polyoxyalkylene ether oils. dimethylpolysiloxane, methylphenylpolysiloxane, octamethyltetracyclosiloxane, decamethylcyclopentasiloxane, polyether-modified silicone oils, or similar silicone oils.

Other cosmetic raw material components may comprise glycerin, propylene glycol, 1,3-butylene glycol, butylene glycol, polyethylene glycol, sodium d,l-pyrrolidone carboxylate, sodium lactate, sorbitol, hyaluronate sodium, or similar moisturizers; higher alcohol sulfuric ester, N-acyl glutamate, phosphoric acid ester, or a similar anionic surface-active agent, cationic surface-active agent, betaine-type, amino-type, imidazoline-type, lecithin-type, or similar amphoteric surface-active agents; polyhydric alcohol ester-based, ethylene oxide condensation-type, and other nonionic surfactants; iron oxides and other colored pigments; zinc oxides, titanium oxides, zirconium oxides, and other white pigments; mica, talc, cericite, and other pigment extenders; carrageenan, alginic acid, alginic acid salts, gum arabic, traganth gum, pectin, starch, xanthan gum, Guar gum, carboxymethyl cellulose, polyoxyethyleneglycol distearate, sodium polyacrylate, polyethylene glycol, or similar thickeners; 2-hydroxy-4-methoxybenzophenone, or benzophenone derivatives; 2-(2'-hydroxy-5'-methylphenyl)-benzotriazole, or other benzotriazole derivatives; cinnamon acid ester, or other UV absorbers; potassium glycyrrhizinate, tocopherol acetate, or other anti-inflammatory agents; methylparaben, butylparaben, or other anticeptic agents; triclosan, trichlorocarban, or other anti-bacterial agents; BHA, BHT, γ-oryzanol, or other antioxidants.

The following other cosmetic raw material components can also be added when the aforementioned cosmetics are used as hair cosmetics: glycerin monostearate, or other glycerin fatty acid esters; sorbitan monopalmitate, or other sorbitan fatty acid esters; polyoxyethylene cetyl ester, or similar polyoxyethylene alkyl ethers; polyoxyethylenestearyl ether, polyoxyethylene sorbitan monolaurate, or other polyoxyethylene fatty acid esters; as well as polyoxyethylene alkyl phenyl ether, polyoxyethylene castor oil, polyoxyethylene cured castor oil, fatty acid alkylol amide, or other non-ionic surface-active agents; stearyltrimethyl ammonium chloride, behenyltrimewthyl ammonium chloride, or other monoalkyltrimentyl ammonium chloride; distearyldimethyl-ammonium chloride, dibehenyldimethylammonium chloride, and other dialkyldimethyl ammonium chlorides, or similar cationic surface-active agents; amphoteric surface-active agents; methacrylic radical-polymerizable polymers and their copolymers with silicone compounds, poly(N-acylalkyleneimine), poly(N-methylpyrrolidone), silicone resins modified by fluorine-containing organic groups or amino groups, unmodified silicone resins, or other skin cosmetics; sulfur, selenium sulfate, zinc pyrithione, octopyrox, zinc pyridium-1-thiol-N-oxide, salicylic acid, 2,4,4'-trichloro-2'-hydroxydiphenyl ether, 1-hydroxy-2-pyridone compounds, and other antidandruff agents; squalane, lanolin, perfluoropolyether, cationic polymers, and other tactile sensation improvers; ethanol, isopropyl alcohol, 1,3-butylene glycol, ethylene glycol, propylene glycol, glycerin, or other antifreezing agents; ethylenediamine tetraacetate, citric acid, ethane-1-hydroxy-1,1-diphosphonic acid and their salts, or similar chalates; pearlizing agents, pigments, dyes, or other coloring agents; vitamins, nourishing additives, hormones, fragrants, pH adjusters, sprays, and other components listed in the Encyclopedia of Shampoo Ingredients (Micelle Press, 1985).

There are no special restrictions with regard to the amount in which the silicone oil composition can be used for the preparation of a cosmetic material. It is recommended, however, that the content of the oil recalculated on a solid basis in the cosmetic material be in the range of 0.1 to 99.9 wt.%, preferably 0.5 to 99 wt.%. If the silicone oil composition is contained in an amount exceeding the recommended upper limit, it will lose its efficiency as a cosmetic material. If, on the other hand, the content of the silicone oil composition is below the recommended lower limit, it will be difficult to improve tactile characteristics of the cosmetic material.

### Examples

The method for preparation of the silicone oil composition of the invention will be described in detail using examples. All values of viscosities given in the examples were measured at 25°C. Average diameters of cross-linked silicone particles, average diameters of emulsion droplet of amino-modified silicone oil emulsified in the aqueous emulsion, as well as values of viscosity and of viscoelastic properties of the silicone compositions were measured by the methods described below.

### [Average Diameter of Cross-Linked Silicone Particles]

The average diameter of cross-linked silicone particles contained in the aqueous suspension was determined as a median diameter which is the particle diameter corresponding to 50% of the cumulative distribution. Measurements were carried out by means of a diffraction-type diameter distribution analyzer Model LA-500 of Horiba Ltd.

### [Average Diameter of Amino-Modified Silicone Oil Emulsion Droplets]

The aqueous emulsion of the amino-modified silicone oil was measured with a diffraction-type diameter distribution analyzer (Model LA-750 of Horiba Ltd.), and the average diameter of its emulsion droplets was determined as a median diameter (which is the particle diameter corresponding to 50% of the cumulative distribution).

### [Viscosity of Silicone Oil Composition]

Viscosity of the silicone oil composition was measured by means of an EMD-type viscometer (the product of Tokyo Keiki Co., Ltd.) with the use of the 3° x R14 cone. Measurement values were taken after 3 min. rotation with a rotation frequency of 10 rpm.

### [Viscoelasticity of Silicone Oil Composition]

The storage modulus G' (Pa), the loss modulus G" (Pa), and the loss tangent tan δ of the oil composition were measured using an ARES viscoelasticity analyzer from Rheometric Scientific, Inc. The measurement conditions were as follows: room temperature(25°C), 25 mm parallel plates, gap: 0.5 to 0.6 mm, strain: 10%; oscillation rate: 0.01 to 50 Hz.

### [Practical Example 1]

A mixture was prepared by mixing 92.10 parts by weight of a dimethylpolysiloxane copolymer which had a viscosity of 400 m·Pa and was capped at both molecular terminals with dimethylvinylsiloxy groups (content of vinyl groups = 1.18 wt.%) with 7.90 parts by weight of a copolymer of dimethylsiloxane and methylhydrogensiloxane which was capped at both molecular terminals with trimethylsiloxy groups and had viscosity of 50 m·Pa (content of silicon-bonded hydrogen atoms = 0.43%). The mixture was then combined with 29.5 parts by weight of a preliminarily prepared aqueous solution obtained by dissolving 1.6 parts by weight of polyoxyethylene alkyl ether (HLB = 14.5) and 1.6 parts by weight of 2-phenoxyethanol in 96.8 parts by weight of pure water. The obtained mixture was then emulsified in a colloid mill, and combined with 27.6 parts by weight of pure water. As a result an aqueous emulsion of a silicone rubber composition was produced.

The obtained emulsion was further combined with an aqueous emulsion of a platinum catalyst having a main component in the form of a platinum complex of 1,3-divinyl-1,1,3,3-tetramethyl-disiloxane (average diameter of platinum catalyst particle = 0.05 µm; concentration of metallic platinum = 0.05 wt.%), which was added in such an amount that the content of metallic platinum in weight units was 100 ppm per silicone rubber composition contained in the aforementioned emulsion. The combined components were uniformly mixed.

The obtained emulsion was held intact for 1 day at 50°C, and then the silicone rubber composition was cross-linked by a hydrosilylation reaction, whereby an aqueous suspension of spherical silicone rubber particles was produced. The content of silicon rubber particles dispersed in the obtained aqueous dispersion was 63%, and the average diameter of the silicone rubber particles was 2.5 µm.

Next, 29,5 parts by weight of an aqueous solution preliminarily prepared by dissolving 1.6 parts by weight of polyoxyethylene alkyl ether (HLB = 14.5) and 1.6 parts by weight of 2-phenoxyethanol in 96.8 parts by weight of pure water was added to 100 parts by weight of an amino-modified silicone oil that had a viscosity of 1,200 mPa·s and was represented by the following formula: 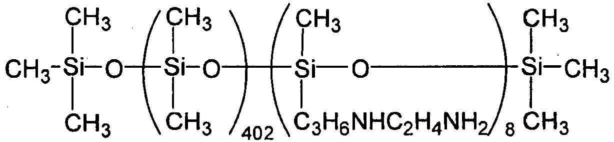 The obtained mixture was emulsified by stirring for 5 min. at a rotational frequency of 2000 rpm and then at a rotational frequency of 500 rpm in a Homo Disperser; 29.2 parts by weight of pure water were added, and after an additional 5 min. of stirring, an aqueous emulsion of an amino-modified silicone oil was obtained. In this emulsion, the content of the amino-modified silicone oil was 63 wt., and the average diameter of emulsified droplets of the amino-modified silicone oil was 3.3 µm.

An aqueous mixture was prepared by mixing 40 parts by weight of the obtained aqueous suspension of the silicone rubber particles with 60 parts by weight of the obtained aqueous emulsion of the amino-modified silicone oil. The obtained aqueous mixture was loaded into a Combi mixer (the vacuum mixer of Model HV-030; product of STM Co., Ltd.). While stirring at an anchor mixer rotation rate of 90 rpm and a disperser mixer rotation rate of 1,000 rpm, the water was removed by reducing the pressure while raising the temperature to 75 to 85°C over 1 to 2 hours and holding for 1 hour at 50 mmHg or below. The obtained silicone oil composition had a weight ratio of the silicone rubber particles to the amino-modified silicone oil equal to 40/60. Properties of the obtained silicone oil composition are shown in Table 1.

A shampoo was prepared by mixing 1 part by weight of this silicone oil composition with 5 parts by weight of a polyoxyethylene alkyl ether (HLB = 14.5), and 94 parts by weight of water. Next, after soaking hair in this shampoo, the hair was washed with warm water, and dried. The treated hair appeared to be resistant to tangling and was smooth to touch.

### [Practical Example 2]

A silicone oil composition was prepared by mixing silicone rubber particles and amino-modified silicone oil in a ratio of 20/80 by the same method as in Practical Example 1, except that the aqueous suspension of the silicone rubber particles was added in the amount of 20 parts by weight and the aqueous emulsion of the amino-modified silicone oil was added in the amount of 80 parts by weight. Properties of the obtained silicone oil composition are shown in Table 1.

A shampoo was prepared by mixing I part by weight of the silicone oil composition with 5 parts by weight of a polyoxyethylene alkyl ether (HLB = 14.5), and 94 parts by weight of water. Next, after soaking hair in this shampoo, the hair was washed with warm water, and dried. The treated hair appeared to be resistant to tangling and was smooth to touch.

### [Practical Example 3]

A uniform mixture was prepared by mixing 90.49 parts by weight of a dimethylpolysiloxane which had a viscosity of 40 m·Pa and was capped at both molecular terminals with hydroxyl groups (content of silicon-bonded hydroxyl groups = 3.8 wt.%), 9.51 parts by weight of methylhydrogenpolysiloxane which was capped at both molecular terminals with trimethylsiloxy groups and had viscosity of 20 m·Pa (content of silicon-bonded hydrogen atoms = 1.56%), and 0.86 parts by weight of tin dioctylate. The mixture was then combined with 53.6 parts by weight of a preliminarily prepared aqueous solution obtained by dissolving 1.6 parts by weight of polyoxyethylene alkyl ether (HLB = 14.5) and 1.6 parts by weight of 2-phenoxyethanol in 96.8 parts by weight of pure water. The obtained mixture was then emulsified in a colloid mill, and combined with 133.7 parts by weight of pure water. As a result an aqueous emulsion of the silicone rubber composition was produced. The obtained emulsion was held intact for 1 week at room temperature, and then the silicone rubber composition was cross-linked by a condensation redaction, whereby an aqueous suspension of spherical silicone rubber particles was produced.

A silicone oil composition was prepared by mixing silicone rubber particles and amino-modified silicone oil by the same method as in Practical Example 2, except that the ratio of the silicone rubber particles to the amino-modified silicone oil was 22/78. Properties of the obtained silicone oil composition are shown in Table 1.

A shampoo was prepared by mixing 1 part by weight of the silicone oil composition with 5 parts by weight of a polyoxyethylene alkyl ether (HLB = 14.5), and 94 parts by weight of water. Next, after soaking hair in this shampoo, the hair was washed with warm water, and dried. The treated hair appeared to be resistant to tangling and was smooth to touch.

### [Comparative Example 1]

The aqueous suspension of the silicone rubber particles prepared in Practical Example 1 was air-dried at room temperature during 1 week. As a result, silicone rubber particles having 0.5 wt.% weight loss on heating measured under conditions of 105°C/l hour/ 1 g sample were obtained. Next, 20 parts by weight of the obtained silicone rubber particles were mixed for 10 min. with 80 parts by weight of the amino-modified silicone oil obtained in Practical Example I . Mixing was carried out with the use of a blade-type stirrer (three-one motor) rotating at a speed of 300 rpm. However, the silicone rubber particles could not be uniformly dispersed in the silicone oil. It could be found by finger touch that the obtained silicone oil composition contained agglomerated particles.

### [Comparative Example 2]

The aqueous suspension of the silicone rubber particles prepared in Practical Example 1 was air-dried at room temperature during 1 week. As a result, silicone rubber particles having 0.1 wt.% weight loss on heating measured under conditions of 105°C/1 hour/ 1 g sample were obtained. Next, 12.6 parts by weight of the obtained silicone rubber particles were mixed for 10 min. with 80 parts by weight of the aqueous emulsion of amino-modified silicone oil obtained in Practical Example 1. Mixing was carried out with the use of a blade-type stirrer (three-one motor) rotating at a speed of 300 rpm. As a result, a thin film was formed on the surface of the mixture after drying in air, and one week later the mixture remained non-uniform and contained a large amount of residual water.

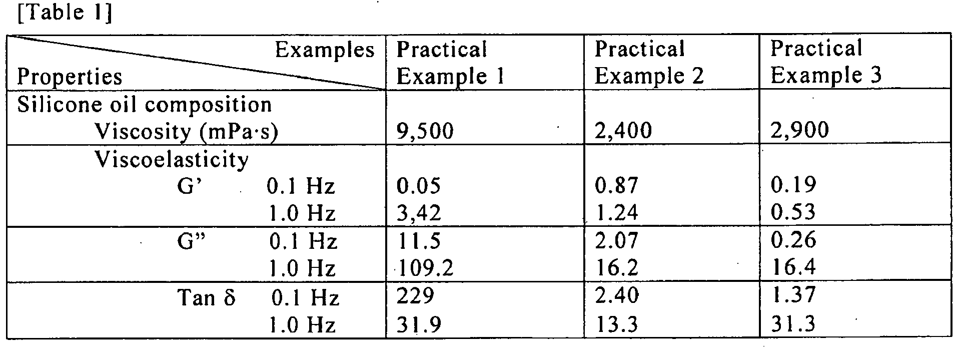

### Industrial Applicability

Since the silicone oil composition obtained by the method of the present invention contains cross-linked silicone particles uniformly dispersed in amino-modified silicone oil and is characterized by excellent handling properties, this composition is suitable for use as a lubricating agent, an additive to resin, a cosmetic material, a substance for use in medicine, etc. In particular, since this silicone oil composition is prepared from amino-modified silicone oil, it can be easily dispersed in aqueous solvents and strongly adhere to such substrates as skin, hair, and so forth. Therefore, the composition is mostly suitable for use as a cosmetic material, in particular hair cosmetics, as it imparts a feel of smooth touch to hair.

### Description of the Reference Numbers in Drawing

- 1: stirring apparatus container
- 2: stirring means that rotates at low speed
- 3: stirring means that rotates at high speed
- 4: mixture of an aqueous suspension of cross-linked silicone particles with an aqueous emulsion of amino-modified silicone oil

## Claims

1. A method of producing a silicone oil composition, **characterized by** removing water, after mixing an aqueous suspension of cross-linked silicone particles having an average particle diameter in the range of 0.1 to 500 µm with an aqueous emulsion of an amino-modified silicone oil having an average emulsion droplet diameter in the range of 0.05 to 100 µm.

2. The production method according to claim 1, wherein the aqueous suspension of cross-linked silicone particles is obtained by dispersing a cross-linkable silicone composition in water and cross-linking the dispersed composition in water.

3. The production method according to claim 2, wherein the cross-linkable silicone composition is cross-linkable by a hydrosilylation reaction or a condensation reaction.

4. The production method according to claim 1, wherein viscosity of the amino-modified silicone oil at 25°C ranges from 1 to 100,000, 000 mPa·s.

5. The production method according to claim 1, wherein the weight ratio of the cross-linked silicone particles to the amino-modified oil ranges from 1 : 99 to 50 : 50.

6. The production method according to claim 1, which is further **characterized by** removing the water while stirring water-based mixture under reduced pressure with a stirring apparatus that has at least a stirring means that rotates at from 1 to 500rpm along the inner wall of a container and a stirring means that rotates at from 100 to 20000rpm in the interior of the container, after mixing the aqueous suspension of cross-linked silicone particles with the aqueous emulsion of the amino-modified silicone oil.

7. The production method according to claim 6, wherein a stirring means that rotates at from 1 to 500rpm along the inner wall of a container is an anchor blade.

8. The production method according to claim 6, wherein a stirring means that rotates at from 1000 to 20000rpm the interior of the container is a dispersion mixer.

## Patentansprüche

1. Verfahren zum Herstellen einer Silikonölzusammensetzung, **gekennzeichnet durch** Entfernen von Wasser nach Mischen einer wässrigen Suspension vernetzter Silikonteilchen, die einen durchschnittlichen Teilchendurchmesser im Bereich von 0,1 bis 500 µm aufweisen, mit einer wässrigen Emulsion eines aminomodifizierten Silikonöls, die einen durchschnittlichen Emulsionströpfchendurchmesser im Bereich von 0,05 bis 100 µm aufweist.

2. Herstellungsverfahren nach Anspruch 1, wobei die wässrige Suspension vernetzter Silikonteilchen durch Dispergieren einer vernetzbaren Silikonzusammensetzung in Wasser und Vernetzen der dispergierten Zusammensetzung in Wasser hergestellt wird.

3. Herstellungsverfahren nach Anspruch 2, wobei die vernetzbare Silikonzusammensetzung durch eine Hydrosilylierungsreaktion oder eine Kondensationsreaktion vernetzbar ist.

4. Herstellungsverfahren nach Anspruch 1, wobei die Viskosität des aminomodifizierten Silikonöls bei 25 °C im Bereich von 1 bis 100.000.000 mPa.s liegt.

5. Herstellungsverfahren nach Anspruch 1, wobei das Gewichtsverhältnis der vernetzten Silikonteilchen zu dem aminomodifizierten Öl im Bereich von 1 : 99 bis 50 : 50 liegt.

6. Herstellungsverfahren nach Anspruch 1, das ferner durch Entfernen des Wassers gekennzeichnet ist, während die wasserbasierte Mischung unter verringertem Druck mit einer Rührvorrichtung gerührt wird, die mindestens ein Rührmittel, das sich mit 1 bis 500 U/min entlang der Innenwand eines Behälters dreht, und ein Rührmittel, das sich mit 100 bis 20000 U/min im Inneren des Behälters dreht, aufweist, nachdem die wässrige Suspension vernetzter Silikonteilchen mit der wässrigen Emulsion des aminomodifizierten Silikonöls gemischt wurde.

7. Herstellungsverfahren nach Anspruch 6, wobei ein Rührmittel, das sich mit 1 bis 500 U/min entlang der Innenwand eines Behälters dreht, eine Ankerklinge ist.

8. Herstellungsverfahren nach Anspruch 6, wobei ein Rührmittel, das sich mit 1000 bis 20000 U/min im Inneren des Behälters dreht, ein Dispersionsmischer ist.

## Revendications

1. Procédé de production d'une composition d'huile de silicone, **caractérisé par** l'élimination d'eau, après mélange d'une suspension aqueuse de particules de silicone réticulée ayant un diamètre moyen de particule dans l'intervalle de 0,1 à 500 µm avec une émulsion aqueuse d'une huile de silicone à modification amino ayant un diamètre moyen de gouttelette d'émulsion dans l'intervalle de 0,05 à 100 µm.

2. Procédé de production selon la revendication 1, dans lequel la suspension aqueuse de particules de silicone réticulée est obtenue en dispersant une composition de silicone réticulable dans de l'eau et en réticulant la composition dispersée dans l'eau.

3. Procédé de production selon la revendication 2, dans lequel la composition de silicone réticulable est réticulable par une réaction d'hydrosilylation ou une réaction de condensation.

4. Procédé de production selon la revendication 1, dans lequel la viscosité de l'huile de silicone à modification amino à 25 °C va de 1 à 100 000 000 mPa.s.

5. Procédé de production selon la revendication 1, dans lequel le rapport pondéral des particules de silicone réticulée sur l'huile à modification amino va de 1 : 99 à 50 : 50.

6. Procédé de production selon la revendication 1, qui est **caractérisé en outre par** l'élimination de l'eau tout en agitant le mélange à base d'eau sous pression réduite avec un appareil d'agitation qui a au moins un moyen d'agitation qui tourne à une vitesse allant de 1 à 500 tr/min le long de la paroi interne d'un récipient et un moyen d'agitation qui tourne à une vitesse allant de 100 à 20 000 tr/min à l'intérieur du récipient, après mélange de la suspension aqueuse de particules de silicone réticulée avec l'émulsion aqueuse de l'huile de silicone à modification amino.

7. Procédé de production selon la revendication 6, dans lequel un moyen d'agitation qui tourne à une vitesse allant de 1 à 500 tr/min le long de la paroi interne d'un récipient est une pale à ancre.

8. Procédé de production selon la revendication 6, dans lequel un moyen d'agitation qui tourne à une vitesse allant de 1000 à 20 000 tr/min à l'intérieur du récipient est un mélangeur de dispersion.
